# EUROPEAN PATENT APPLICATION

(11) **EP 4 838 918 A1**
(43) Date of publication of application: **11.11.2026**
(21) Application number: 25742299.8
(22) Date of filing: 16.01.2025
(51) Int. Cl.: H04W 8/24, H04W 48/18, H04W 88/14, H04W 8/22, H04W 60/00, H04W 8/02

(54) **METHOD AND APPARATUS FOR DYNAMIC NETWORK SLICE SELECTION IN WIRELESS COMMUNICATION SYSTEM**

(30) Priority: 18.01.2024 KR 20240008356; 15.10.2024 KR 20240140604
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2025/099016
(87) International publication number: WO 2025/155151

(57) **Abstract**

In an embodiment of the present disclosure, a method for operating an access and mobility management function (AMF) in a wireless communication system is provided. The method may comprise the steps of: transmitting a subscription information request message corresponding to a UE to a unified data management (UDM); receiving a notification message regarding updated subscription information from the UDM; determining whether or not to update network slice-related UE configuration information with regard to the UE; transmitting updated UE configuration information to the UE if the network slice-related UE configuration information has been updated; and receiving a message indicating that configuration information update has been completed from the UE.

## Description

### Technical Field

The present disclosure relates to a method and apparatus for dynamically selecting a network slice in a wireless communication system.

### Background Art

To meet the ever-increasing demand with respect to wireless data traffic since the commercialization of the 4th generation (4G) communication system, there have been efforts to develop an advanced 5th generation (5G) or pre-5G communication system. For this reason, the 5G or pre-5G communication system is also called a beyond fourth generation (4G) network communication system or post long term evolution (LTE) system. Implementation of the 5G communication system using ultrahigh frequency (millimeter wave (mmWave)) bands, e.g., 60 giga hertz (GHz) bands, is being considered to attain higher data transfer rates. To reduce propagation loss of radio waves and increase a transmission range of radio waves in the ultrahigh frequency bands, beamforming, massive multiple-input multiple-output (MIMO), full dimensional MIMO (FD-MIMO), array antenna, analog beamforming, and large-scale antenna techniques are under discussion. To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system. In addition, in the 5G system, advanced coding modulation (ACM) methods, such as hybrid FSK and QAM modulation (FQAM), sliding window superposition coding (SWSC), and advanced access technologies, such as filter bank multi carrier (FBMC), non-orthogonal multiple access (NOMA), and sparse code multiple access (SCMA), are being developed.

In the meantime, the Internet is evolving from a human-oriented connectivity network where humans create and consume information to an Internet of things (IoT) network where distributed entities or things send, receive and process information without human intervention. Internet of Everything (IoE) technologies, in which big data processing technology through connection with a cloud server, for example, is combined with IoT technology, have also emerged. To implement IoT, various technologies, such as a sensing technology, a wired/wireless communication and network infrastructure, a service interfacing technology, and a security technology are required, and even technologies for sensor networks, machine to machine (M2M) communication, machine type communication (MTC) for connection between things are recently being studied. In the IoT environment, intelligent information technology (IT) services that create new values for human life by collecting and analyzing data generated from connected things may be provided. IoT may be applied to a variety of areas, such as smart homes, smart buildings, smart cities, smart cars or connected cars, smart grids, health care, smart home appliances and advanced medical services through convergence and combination between existing IT technologies and various industrial applications.

In this regard, various attempts to apply the 5G communication system to the IoT network are being made. For example, technologies regarding sensor network, M2M, MTC, etc., are implemented by 5G communication technologies, such as beamforming, MIMO, array antenna schemes, etc. Application of a cloud radio access network (cloud RAN) as the aforementioned big data processing technology may be an example of convergence of 5G and IoT technologies.

Furthermore, efforts are underway to develop sixth generation (6G) communication systems approximately five times faster than the highest speed of 5G. Accordingly, implementation in higher frequency bands than 5G is being considered to attain high data transfer rates.

With the advancement of the aforementioned wireless communication systems, it is possible to provide various services, and in particular, there is growing demand for session continuity support techniques to provide seamless services.

### Disclosure of Invention

### Technical Problem

An embodiment of the present disclosure may provide a method and apparatus for effectively providing services in a wireless communication system.

### Solution to Problem

As a technical means for attaining the aforementioned technical objectives, disclosed is a method for operating an access and mobility management function (AMF) in a wireless communication system including transmitting, to a unified data management (UDM), a subscription information request message corresponding to a user equipment (UE), receiving a notification message regarding updated subscription information from the UDM, determining whether to update UE configuration information related to a network slice for the UE, when UE configuration information related to the network slice is updated, transmitting the updated UE configuration information to the UE, and receiving, from the UE, a message indicating that updating of configuration information is completed.

As a technical means for attaining the aforementioned technical objectives, disclosed is a method for operating a unified data management (UDM) in a wireless communication system including receiving, from an access and mobility management function (AMF), a subscription information request message corresponding to a user equipment (UE), receiving a message including information for network slice selection or re-selection from an application function (AF), identifying a subscription permanent identifier (SUPI) associated with the UE, transmitting, to a unified data repository (UDR), a request message for obtaining subscriber information for the SUPI, and obtaining the subscriber information from the UDR, transmitting a message for subscriber information update to the UDR, transmitting a notification message regarding updated subscription information to the AMF, receiving, from the AMF, subscription information request message for the UE, and transmitting, to the AMF, updated subscription information in response to the subscription information request message.

As a technical means for attaining the aforementioned technical objectives, disclosed is a method for operating a policy control function (PCF) in a wireless communication system including receiving, from an access and mobility management function (AMF), a subscription information request message corresponding to a user equipment (UE), receiving a message including information for network slice selection or re-selection from an application function (AF), transmitting, to a unified data repository (UDR), a request message for obtaining subscriber information for a subscription permanent identifier (SUPI) associated with the UE, and obtaining the subscriber information from the UDR, transmitting a message for subscriber information update to the UDR, transmitting a notification message regarding updated subscription information to the AMF, receiving, from the AMF, a policy information request message for the UE, identifying subscription information stored in the UDR based on the policy information request message, and transmitting, to the AMF, updated subscription information in response to the policy information request message.

### Brief Description of Drawings

FIG. 1 illustrates a structure of a fifth generation (5G) system, according to an embodiment of the present disclosure.
FIG. 2 illustrates a dynamic network slice selection method in a wireless communication system, according to an embodiment of the present disclosure.
FIG. 3 illustrates a dynamic network slice selection method in a wireless communication system, according to an embodiment of the present disclosure.
FIG. 4 illustrates a network entity, according to an embodiment of the present disclosure.

### Mode for the Invention

Technological content well-known in the art but not directly related to the present disclosure will be omitted in the following description. Through the omission of content that might otherwise obscure the subject matter of the present disclosure, the subject matter will be understood more clearly.

Effects and features of the present disclosure, and methods of attaining them will be clearly understood by referring to embodiments as will be described in detail below in connection with accompanying drawings. The present disclosure is not, however, limited to embodiments as will be described below, but may be implemented in many different forms.

Herein, terms to identify access nodes, terms to refer to network entities, terms to refer to messages, terms to refer to interfaces among network entities, terms to refer to various types of identification information, etc., are examples for convenience of explanation. Accordingly, the present disclosure is not limited to the terms as herein used, and may use different terms to refer to the items having the same meaning in a technological sense.

In the following description, for convenience of explanation, some of the terms and names defined by the 3rd generation partnership project new radio (3GPP NR) will be used. The present disclosure is not, however, limited to the terms and definitions, and may be equally applied to systems that conform to other standards. In the present disclosure, a base station may refer to a gNB. Furthermore, the term 'terminal' may refer not only to a cell phone, an NB-IoT device, and a sensor but also to other wireless communication devices.

In the following description, a base station is an entity for performing resource allocation for a terminal, and may be at least one of a gNB, an eNB, a Node B, a base station (BS), a radio access unit, a base station controller, or a network node. The terminal may include a user equipment (UE), a mobile station (MS), a cellular phone, a smart phone, a computer, or a multimedia system capable of performing a communication function. It is, of course, not limited thereto.

The present disclosure may be applied to the 3GPP NR (which is the 5G mobile communication standard). The present disclosure may be applied to intelligent services based on 5G communication and Internet of things (IoT) related technologies, e.g., smart homes, smart buildings, smart cities, smart cars, connected cars, health care, digital education, smart retail, and security and safety services.

Wireless communication systems are evolving from early systems that provide voice-oriented services to broadband wireless communication systems that provide high data rate and high quality packet data services such as 3GPP high speed packet access (HSPA), long term evolution (LTE) or evolved universal terrestrial radio access (E-UTRA), LTE-advanced (LTE-A), LTE-Pro, 3GPP2 high rate packet data (HRPD), ultra mobile broadband (UMB), and IEEE 802.16e communication standards.

As a representative example of such a broadband wireless communication system, an LTE system adopts orthogonal frequency division multiplexing (OFDM) for a downlink (DL) and single carrier frequency division multiple access (SC-FDMA) for an uplink (UL). The UL refers to a radio link for a UE or MS to send data or a control signal to an eNode B or BS, and the DL refers to a radio link for a BS to send data or a control signal to a UE or MS. Such a multiple access scheme allocates and operates time-frequency resources for carrying data or control information for respective users not to overlap each other, i.e., to maintain orthogonality, thereby differentiating each user's data or control information.

As a future communication system after the LTE, the 5G communication system needs to freely reflect various demands from users and service providers and thus support services that simultaneously meet the various demands. The services considered for the 5G communication system may include enhanced Mobile Broadband (eMBB), massive Machine Type Communication (mMTC), Ultra Reliability Low Latency Communication (URLL), etc.

Although the following embodiments of the present disclosure will now be focused on an LTE, LTE-A, LTE Pro or fifth generation (5G) (or new radio (NR), next generation mobile communication) system for example, they may be equally applied to other communication systems with similar technical backgrounds or channel types. Furthermore, embodiments of the present disclosure will also be applied to other communication systems with some modifications to such an extent that does not significantly deviate from the scope of the present disclosure when judged by those of ordinary skill in the art.

Descriptions of some well-known technologies that possibly obscure the present disclosure will be omitted, if necessary. Embodiments of the present disclosure will now be described with reference to accompanying drawings.

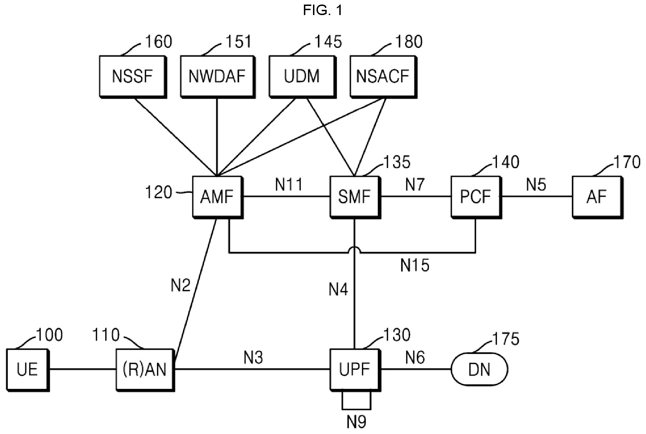

FIG. 1 illustrates a structure of a 5G system, according to various embodiments of the present disclosure.

A 5G mobile communication network is comprised of a 5G user equipment (5G UE) or terminal, a 5G radio access network (5G RAN) (e.g., base station (BS), 5G nodeB (gNB), evolved nodeB (eNB), etc.) and a 5G core network. The 5G core network may be comprised of network functions (NFs) such as an access and mobility management function (AMF) that provides a mobility management function, a session management function (SMF) that provides a session management function, a user plane function (UPF) that serves to transfer data, a policy control function (PCF) that provides a policy control function, a unified data management (UDM) that provides a function of managing data such as subscriber data and policy control data, a unified data repository (UDR) that stores data of the many different NFs, etc. The 5G core network may further include other NFs such as a network slice selection function (NSSF), a network data analytic function (NWDAF), an application function (AF), a data network (DN), a network slice admission control function (NSACF), etc.

In the 3GPP system, a conceptual link that connects between the NFs in the 5G system is defined as a reference point. For example, referring to FIG. 1, reference points included in the 5G system architecture may be as follows:
- N1: a reference point between the UE and the AMF
- N2: a reference point between the (R)AN and the AMF
- N3: a reference point between the (R)AN and the UPF
- N4: a reference point between the SMF and the UPF
- N5: a reference point between the PCF and the AF
- N6: a reference point between the UPF and the DN
- N7: a reference point between the SMF and the PCF
- N8: a reference point between the UDM and the AMF
- N9: a reference point between two core UPFs.
- N10: a reference point between the UDM and the SMF
- N11: a reference point between the AMF and the SMF
- N12: a reference point between the AMF and an authentication server function (AUSF)
- N13: a reference point between the UDM and the AUSF
- N14: a reference point between two AMFs
- N15: a reference point between the PCF and the AMF in a non-roaming scenario, and a reference point between the PCF and the AMF in a visited network in a roaming scenario

In the 5G system, network slicing refers to a technology and architecture that enables various virtualized and independent logical networks in a single physical network. Network operators provide services by configuring virtual end-to-end networks known as network slices to satisfy the specialized requirements of certain services or applications. In this case, the network slices may be distinguishable through identifiers known as single-network slice selection assistance information (S-NSSAI).In a UE registration procedure, the network transmits a set of allowed slices (e.g., allowed NSSAI(s)) to the UE, and the UE transmits and receives application data through a protocol data unit (PDU) session established with one S-NSSAI (i.e., a network slice) from the set.

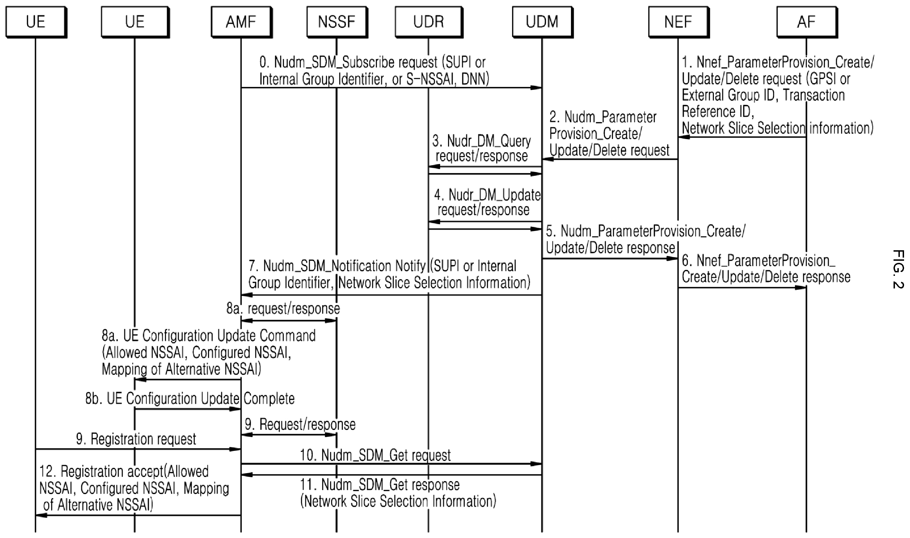

FIG. 2 illustrates a dynamic network slice selection method in a wireless communication system, according to an embodiment of the present disclosure. In FIG. 2, illustrated is a method of providing network slice selection information in a registration procedure, according to an embodiment of the present disclosure. Not all the operations shown in FIG. 2 are essential components, and some operations may be omitted in an embodiment.

In operation 0, the AMF may perform a subscription request to the UDM for subscriber information for the UE. A UE identifier, a subscription permanent identifier (SUPI) may be included in the corresponding message. In an embodiment where the PCF is used instead of the UDM, the AMF may perform subscription request to the PCF for the subscriber information for the UE. In the case that the PCF is used instead of the UDM, the PCF may be applied instead of the UDM in the subsequent description.

In operation 1, the AF may transmit a message (e.g., Nnef_ParameterProvision_Create, update, or delete message) including information for network slice selection or re-selection to the UDM through a network exposure function (NEF).

In the embodiment where the PCF is used instead of the UDM, the AF may transmit a message (e.g., Nnef_AMInfluence_Create, Update, or delete message) including information for network slice selection or re-selection to the PCF through the NEF.

In a case that the AF transmits the message directly to the UDM (or PCF), the AF may transmit the message (Nudm_ParameterProvision_Create, update, or delete message) of operation 2 directly to the UDM (or PCF) without passing through the NEF.

The message transmitted by the AF to the NEF (or UDM) may include the following information:
- UE identifier information: a generic public subscription identifier (GPSI) or a subscription permanent identifier (SUPI) may be included. Alternatively, an external group ID that indicates multiple UEs may be included.
- Transaction Reference ID: when the AF intends to update or delete information that exists from a previous request (e.g., by transmitting an update or delete message) to the NEF, the AF may include a corresponding transaction reference ID.
- Network Slice Selection Information: for network slice selection information for the UE, one or more of S-NSSAI(s) information to be used by the UE, information about other S-NSSAI(s) to be alternatively used for each S-NSSAI (other S-NSSAI(s) per S-NSSAI), and information about S-NSSAI(s) to be used for each application identifier (or for each application category identifier) may be included. Furthermore, time information (e.g., start time, end time, duration, etc.) indicating when the S-NSSAI information that is to be alternatively used for each S-NSSAI is to be applied may be included.
- Priority information: information indicating a priority for applying slice selection information may be included for each UE. When the alternative S-NSSAI (e.g., substitute S-NSSAI) included in the slice selection information is congested, the network may determine whether to allow the alternative S-NSSAI for the UE according to the priority for applying the slice selection information.

In the embodiment where the PCF is used instead of the UDM, the information provided by the AF may include an application identifier (e.g., application ID or AF service ID).

When the NEF receives the message from the AF in operation 1, the NEF may perform authorization for the request of the AF, and when the authorization fails, operations 2 to 5 may be skipped and the NEF may transmit a response message including information indicating failure or rejection to the AF in operation 6. For example, when the S-NSSAI(s) included in the request message from the AF are not included in the subscriber information of the UE included in the request message of the AF, the NEF may transmit a response message including information indicating failure or rejection.

When the authorization for the request of the AF is successful, the NEF may transmit, in operation 2, a message to the UDM (or the PCF) according to the message received in operation 1. When the NEF receives a create message in operation 1, the NEF may generate a transaction reference ID. The message transmitted by the NEF to the UDM (or PCF) may include the information that is included in the message received in operation 1.

In operation 3, when the message received in operation 2 includes a UE identifier instead of the SUPI, the UDM may identify the SUPI associated with the UE based on stored information. When the message received in operation 2 includes an external group ID, the UDM may identify a corresponding internal group ID based on the stored information.

To authenticate a subscriber information change according to the request of operation 2 for the UEs (e.g., SUPI(s)) corresponding to the request of operation 2, the UDM may obtain subscriber information for the SUPI(s) from the UDR by transmitting, to the UDR, a request message for obtaining the subscriber information for the SUPI(s).

In the embodiment where the PCF is used instead of the UDM, to authenticate a subscriber information change according to the request of operation 2 for the UEs (e.g., SUPI(s)) corresponding to the request of operation 2, the PCF may obtain information from the UDR by transmitting a request message for obtaining the subscriber information for the SUPI(s) or an application ID.

In operation 4, when the subscriber information change is successfully authenticated in operation 3, the UDM (or PCF) may transmit a message for updating the subscriber information to the UDR. The message may include the following information:
- SUPI
- S-NSSAI(s) per S-NSSAI: The network slice selection information included in the message of operation 1 is included as is, or information derived based on the network slice selection information may be included. For example, information about other slice identifier(s) to be alternatively used for each slice may be included. In this case, S-NSSAI(s) per S-NSSAI included in the subscribed S-NSSAI(s) for the UE may be included.
- Subscribed S-NSSAI(s): when S-NSSAI(s) for the UE are included in the message of operation 1, subscribed S-NSSAI(s) configured based on the S-NSSAI(s) for the UE may be included in updating the subscribed S-NSSAI(s) for the UE based on the S-NSSAI(s) information.

Upon receiving an update message from the UDM (or PCF), the UDR may update subscription information stored in the UDR by using an SUPI included in the message as a data key. The UDR may update the associated subscription information based on information (e.g., S-NSSAI(s) per S-NSSAI or subscribed S-NSSAI(s)) included in the message. When the corresponding subscription information (e.g., subscription information corresponding to S-NSSAI(s) per S-NSSAI or subscribed S-NSSAI(s)) already exists, the UDR may perform overwriting based on the information included in the message received from the UDM (or PCF).When the corresponding subscription information has not existed, the UDR may newly add subscription information (e.g., subscription information corresponding to S-NSSAI(s) per S-NSSAI or subscribed S-NSSAI(s)) based on the information included in the message received from the UDM (or PCF).

In operation 5, the UDM (or PCF) may transmit a response message for the request message of operation 2 to the NEF (or the AF when the AF has requested directly). The message may include information about a result of processing the request of operation 2.

In operation 6, when receiving the message of operation 5, the NEF may transmit a response message for the message of operation 1 to the AF. The message may include information about a result of processing the request of operation 1.

When the UDM (or PCF) performs updating of the subscription information (e.g., subscription information corresponding to S-NSSAI(s) per S-NSSAI or subscribed S-NSSAI(s), or policy information in the embodiment where the PCF is used) in operation 4, the UDM (or PCF) may transmit a notification message to an NF (e.g., the AMF) that has subscribed to the subscription information (or policy information in the embodiment where the PCF is used) in operation 7.When the information stored in the UDR includes time information along with the S-NSSAI(s) per S-NSSAI (e.g., a slice identifier that needs to be changed and alternative slice identifier information), the UDM or the PCF may transmit the notification message to the AMF at a time when the S-NSSAI(s) per S-NSSAI are to be applied according to the time information. Furthermore, at a time when the application of the S-NSSAI(s) per S-NSSAI is to be disabled according to the time information, the UDM or PCF may transmit a notification message for disabling (e.g., notification message for replacement with the existing slice) to the AMF. In this case, the notification message may include only an identifier of the existing slice that had been replaced.

When the alternative slice (e.g., substitute slice) included in the information stored in the UDR is currently congested, the UDM or PCF may not send the notification message to the AMF. When the slice to be alternatively used (e.g., the substitute slice) included in the information stored in the UDR is currently congested and the information stored in the UDR includes priority information indicating a high priority, the UDM or PCF may send the notification message to the AMF. Moreover, the UDM or PCF may transmit a notification message to the AMF responsible for a UE with lower priority information to stop using the alternative slice (e.g., substitute slice).

In this case, the notification message may include the following information:
- SUPI or Internal Group Identifier: an SUPI (i.e., UE identifier) or internal group identifier may be included.
- subscription information corresponding to S-NSSAI(s) per S-NSSAI may be included.
- subscribed S-NSSAI(s) may be included.

In operation 8a, when receiving the notification message of operation 7, the AMF may determine whether to update UE configuration information related to a network slice for the UE with respect to the message. Furthermore, upon receiving a message of operation 11 as will be described later, when there is a PDU session for an S-NSSAI that needs to be changed, the AMF may transmit, to an SMF responsible for the session, a message requesting network slice replacement to the substitute S-NSSAI according to the information included in the message received in operation 7.

When the NSSF is used, the AMF may transmit, to the NSSF, a message querying as to UE configuration information. In this case, when the message received in operation 7 includes the subscribed S-NSSAI(s), the AMF may add the subscribed S-NSSAI received in operation 7 to the message to be transmitted to the NSSF.

When the NSSF is used and the message received in operation 7 includes S-NSSAI(s) per S-NSSAI (e.g., information about other slice identifiers to be used instead of the slice for each network slice identifier for one or more network slice identifiers that are to be changed), instead of deriving requested NSSAI (e.g., information including identifiers of network slices requested by the UE) based on the other alternative identifiers included in the information and adding the requested NSSAI to the message (e.g., nssf_NSSelection Get request) to be transmitted to the NSSF or transmitting the message to the NSSF, the AMF may check whether there is an S-NSSAI to be changed in the existing allowed NSSAI for the UE and when it exists, generate (or update) slice identifier information (e.g., mapping of alternative S-NSSAI) to be used instead of the S-NSSAI to be changed, based on the S-NSSAI(s) per S-NSSAI. When the alternative slice identifier (e.g., alternative S-NSSAI) is not included in the allowed NSSAI, the AMF may update the allowed NSSAI. When the alternative slice identifier (e.g., alternative S-NSSAI) is not included in configured NSSAI, the AMF may update the configured NSSAI. When updating of the allowed NSSAI, configured NSSAI or mapping of alternative S-NSSAI occurs, the AMF may add corresponding configuration information (e.g., one or more of the allowed NSSAI, configured NSSAI or mapping of alternative S-NSSAI) to a UE configuration update command message to be transmitted to the UE through a RAN.

The NSSF may derive allowed NSSAI and/or configured NSSAI based on the message received from the AMF, and then add the allowed NSSAI and/or configured NSSAI to a response message to be transmitted to the AMF. When the allowed NSSAI or configured NSSAI is included in the response message received from the NSSF, the AMF may add corresponding configuration information (e.g., one or more of the allowed NSSAI or configured NSSAI) to the UE configuration update command message to be transmitted to the UE through the RAN.

When the AMF does not use the NSSF and the message received in operation 7 includes the subscribed S-NSSAI(s), the AMF may update the allowed NSSAI and/or configured NSSAI based on the updated subscribed S-NSSAI(s). When updating of one or more of the allowed NSSAI or configured NSSAI occurs, the AMF may add corresponding configuration information (e.g., one or more of the allowed NSSAI or configured NSSAI) to the UE configuration update command message to be transmitted to the UE through the RAN.

When the AMF does not use the NSSF and the message received in operation 7 includes the S-NSSAI(s) per S-NSSAI (e.g., information about other slice identifiers to be used instead of the slice for each network slice identifier for one or more network slice identifiers to be changed), the AMF may check whether S-NSSAI to be changed exists in the existing allowed NSSAI for the UE. When the S-NSSAI to be changed exists in the existing allowed NSSAI for the UE, the AMF may derive slice identifier information (e.g., mapping of alternative S-NSSAI) to be used instead of the S-NSSAI to be changed, based on the S-NSSAI(s) per S-NSSAI. When updating of the allowed NSSAI, configured NSSAI or mapping of alternative S-NSSAI occurs, the AMF may add corresponding configuration information (e.g., one or more of the allowed NSSAI, configured NSSAI or mapping of alternative S-NSSAI) to a UE configuration update command message to be transmitted to the UE through the RAN.

When the allowed NSSAI is included in the message received in operation 8a, the UE may delete allowed NSSAI that has been stored, and store the allowed NSSAI included in the received message. When the configured NSSAI is included in the message received in operation 8a, the UE may delete configured NSSAI that has been stored, and store the configured NSSAI included in the received message. When the mapping of alternative S-NSSAI is included in the message received in operation 8a, the UE may delete mapping of alternative S-NSSAI that has been stored, and store the mapping of alternative S-NSSAI included in the received message. When receiving the mapping of alternative S-NSSAI (e.g., information indicating that alternative S-NSSAI is to be used instead of S-NSSAI), the UE may use the alternative S-NSSAI instead of the existing S-NSSAI included in the information. For example, when a session is required to transmit application data to the existing S-NSSAI, a session establishment request message for data transmission may be transmitted to the alternative S-NSSAI instead of the S-NSSAI. However, the session establishment request message may include the existing S-NSSAI information along with the alternative S-NSSAI.

In operation 8b, the UE may transmit a message indicating that configuration information update is completed through the message received in operation 8a to the AMF through the RAN.

In operation 9, the UE may transmit a registration request message to the AMF through the RAN. The registration request message may be an initial registration request (e.g., registration request whose registration type is set to initial registration) or a mobility registration update request (e.g., registration request whose registration type is mobility registration).

In operation 10, the AMF may transmit a request message including an SUPI to the UDM to receive subscription information for the UE. In an embodiment, the AMF may transmit a request message including an SUPI to the PCF to receive policy information for the UE.

In operation 11, when receiving the message of operation 10, the UDM may obtain subscription information stored in the UDR through the SUPI included in the received message. The UDM may add the subscription information to a response message to be transmitted to the AMF. The subscription information may include the information updated through operation 4.

In an embodiment, when receiving the message of operation 10, the PCF may obtain the subscription information stored in the UDR through the SUPI included in the received message. The information may include the information updated through operation 4.

When the information stored in the UDR includes time information along with the S-NSSAI(s) per S-NSSAI (e.g., a slice identifier that needs to be changed and alternative slice identifier information), the UDM or the PCF may transmit the notification message to the AMF at a time when the S-NSSAI(s) per S-NSSAI are to be applied according to the time information. Furthermore, at a time when the application of the S-NSSAI(s) per S-NSSAI is to be disabled according to the time information, the UDM or PCF may transmit a notification message for disabling (e.g., notification message for replacement with the existing slice) to the AMF. In this case, the notification message may include only an identifier of the existing slice that had been replaced.

In operation 12, when receiving the message of operation 11, the AMF may derive UE configuration information related to a network slice for the UE with respect to the message. Furthermore, upon receiving the message of operation 11, when there is a PDU session for an S-NSSAI that needs to be changed, the AMF may transmit, to the SMF responsible for the session, a message requesting network slice replacement to the substitute S-NSSAI according to the information included in the message received in operation 7.

When the NSSF is used, the AMF may transmit, to the NSSF, a message querying as to UE configuration information. When the message received in operation 11 includes the subscribed S-NSSAI(s), the AMF may add the subscribed S-NSSAI received in operation 11 to the message to be transmitted to the NSSF.

When the NSSF is used and the message received in operation 11 includes S-NSSAI(s) per S-NSSAI (e.g., information about other slice identifiers to be used instead of the slice for each network slice identifier for one or more network slice identifiers that are to be changed), instead of deriving requested NSSAI (e.g., information including identifiers of network slices requested by the UE) based on the other alternative identifiers included in the information and adding the requested NSSAI to the message (e.g., nssf_NSSelection Get request) to be transmitted to the NSSF or transmitting the message to the NSSF, the AMF may check whether there is an S-NSSAI to be changed in the existing allowed NSSAI for the UE and when it exists, generate (or update) slice identifier information (e.g., mapping of alternative S-NSSAI) to be used instead of the S-NSSAI to be changed, based on the S-NSSAI(s) per S-NSSAI. When the alternative slice identifier (e.g., alternative S-NSSAI) is not included in the allowed NSSAI, the AMF may update the allowed NSSAI. When the alternative slice identifier (e.g., alternative S-NSSAI) is not included in the configured NSSAI, the AMF may update the configured NSSAI. When updating of the allowed NSSAI, configured NSSAI or mapping of alternative S-NSSAI occurs, the AMF may add corresponding configuration information (e.g., one or more of the allowed NSSAI, configured NSSAI and mapping of alternative S-NSSAI) to a registration accept message to be transmitted to the UE through the RAN.

The NSSF may derive allowed NSSAI and/or configured NSSAI based on the message received from the AMF, and then add the allowed NSSAI and/or configured NSSAI to a response message to be transmitted to the AMF. When the allowed NSSAI or configured NSSAI is included in the response message received from the NSSF, the AMF may add corresponding configuration information (e.g., one or more of the allowed NSSAI and configured NSSAI) to the registration accept message to be transmitted to the UE through the RAN.

When the AMF does not use the NSSF and the message received in operation 11 includes the subscribed S-NSSAI(s), the AMF may update the allowed NSSAI and/or configured NSSAI based on the updated subscribed S-NSSAI(s). When updating of one or more of the allowed NSSAI or configured NSSAI occurs, the AMF may add corresponding configuration information (e.g., one or more of the allowed NSSAI or configured NSSAI) to the registration accept message to be transmitted to the UE through the RAN.

When the AMF does not use the NSSF and the message received in operation 11 includes the S-NSSAI(s) per S-NSSAI (e.g., information about other slice identifiers to be used instead of the slice for each network slice identifier for one or more network slice identifiers to be changed), the AMF may check whether S-NSSAI to be changed exists in the existing allowed NSSAI for the UE. When the S-NSSAI to be changed exists in the existing allowed NSSAI for the UE, the AMF may derive slice identifier information (e.g., mapping of alternative S-NSSAI) to be used instead of the S-NSSAI to be changed, based on the S-NSSAI(s) per S-NSSAI. When updating of the allowed NSSAI, configured NSSAI or mapping of alternative S-NSSAI occurs, the AMF may add corresponding configuration information (e.g., one or more of the allowed NSSAI, configured NSSAI and mapping of alternative S-NSSAI) to the registration accept message to be transmitted to the UE through the RAN.

When the allowed NSSAI is included in the message received in operation 12, the UE may delete allowed NSSAI that has been stored, and store the allowed NSSAI included in the received message. When the configured NSSAI is included in the message received in operation 12, the UE may delete configured NSSAI that has been stored, and store the configured NSSAI included in the received message. When the mapping of alternative S-NSSAI is included in the message received in operation 12, the UE may delete mapping of alternative S-NSSAI that has been stored, and store the mapping of alternative S-NSSAI included in the received message. When receiving the mapping of alternative S-NSSAI (e.g., information indicating that alternative S-NSSAI is to be used instead of S-NSSAI), the UE may use the alternative S-NSSAI instead of the existing S-NSSAI included in the information. For example, when a session is required to transmit application data to the existing S-NSSAI, a session establishment request message for data transmission may be transmitted to the alternative S-NSSAI instead of the S-NSSAI. However, the session establishment request message may include the existing S-NSSAI information along with the alternative S-NSSAI.

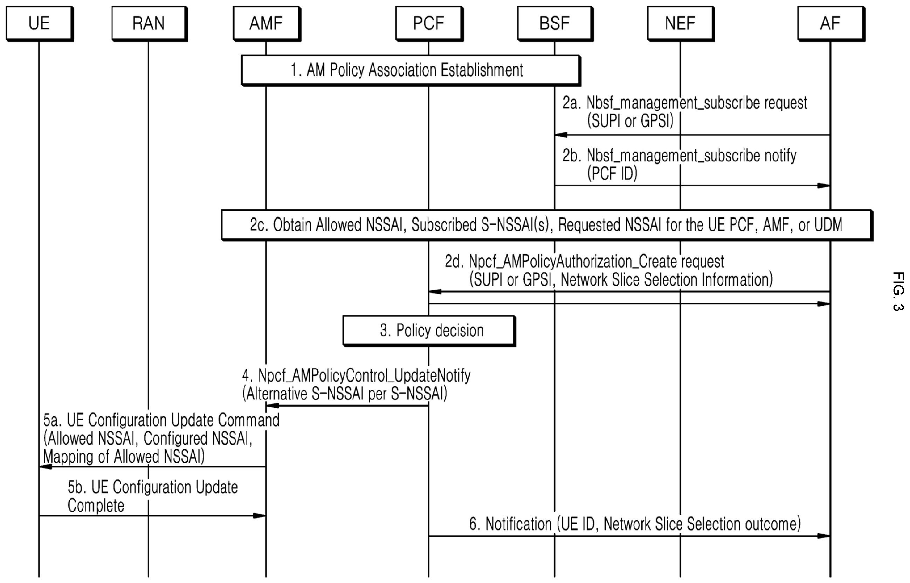

FIG. 3 illustrates a dynamic network slice selection method in a wireless communication system, according to an embodiment of the present disclosure. Not all the operations shown in FIG. 3 are essential components, and some operations may be omitted in an embodiment.

In operation 1, the AMF may transmit an AM policy association establishment request message to the PCF, and the PCF may generate an AM policy and then transmit a response message to the AMF. The PCF may transmit a message for registering itself as a PCF responsible for the UE to a binding support function (BSF). The message transmitted by the PCF to the BSF may include a PCF ID and a UE ID (e.g., an SUPI or GPSI).

In operation 2a, the AF may transmit subscription request information requesting new PCF registration to the BSF directly or through the NEF when the PCF is newly registered for the UE.

In operation 2b, after receiving the request of operation 2a, when the new PCF registration for the UE occurs (e.g., the AM policy association establishment of operation 1), the BSF may transmit a notification message including the PCF ID to the AF directly or through the NEF.

In operation 2c, the AF may determine to provide network slice selection information (e.g., network slice selection information) for the UE. This may occur in the following cases: for example, when the AF requests another network slice to be used as the existing network slice used by the UE has a problem or when a change in the network slice is required due to a modification of the UE user's subscription plan or membership.

When the AF determines to provide network slice selection information, the AF may transmit a request message to the PCF, AMF or UDM to obtain network slice information for the UE (e.g., one or more of allowed NSSAI, subscribed S-NSSAI(s) and requested NSSAI). Upon receiving the message, the PCF, AMF or UDM may add the network slice information (e.g., one or more of allowed NSSAI, subscribed S-NSSAI(s) and requested NSSAI) for the UE to a response message to be transmitted to the AF.

In operation 2d, when the AF determines to provide the network slice selection information, the AF may transmit a request message including the following information to the PCF directly or through the NEF.
- UE identifier information: a generic public subscription identifier (GPSI) or a subscription permanent identifier (SUPI) may be included. Alternatively, an external group ID that indicates multiple UEs may be included.
- Network Slice Selection Information: for network slice selection information for the UE, one or more of S-NSSAI(s) information to be used by the UE, information about other S-NSSAI(s) to be alternatively used for each S-NSSAI (other S-NSSAI(s) per S-NSSAI), or information about S-NSSAI(s) to be used for each application identifier (or for each application category identifier) may be included.

In operation 3, the PCF may receive the message of operation 2d, and determine to update the policy when the message includes the network slice selection information. When the message of operation 2d includes S-NSSAI(s) per S-NSSAI (e.g., information about other slice identifiers to be used instead of the slice for each network slice identifier of one or more network slice identifiers to be changed), the PCF may derive a policy that includes information indicating that the UE needs to use another network slice instead of the existing network slice (alternative S-NSSAI).

In operation 4, the PCF may transmit, to the AMF, the policy updated in operation 3 in a notification message. The notification message may include one or more of the following pieces of information:
- Alternative S-NSSAI(s) per S-NSSAI
- UE ID (GPSI, SUPI, or UE Address): UE identifier information
- Policy Association ID: information identifying a policy

In operations 5a and 5b, the same processes as in operations 8a and 8b of FIG. 2 may be performed.

In operation 6, the PCF may transmit a notification message indicating to the AF that the network slice selection information has been reflected.

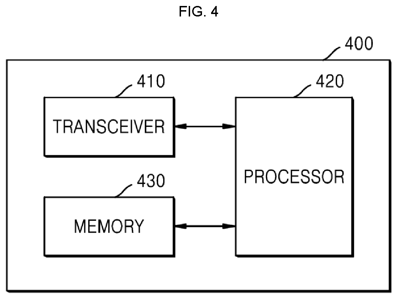

FIG. 4 illustrates a network entity 400, according to an embodiment of the present disclosure. In an embodiment, the network entity 400 may correspond to the NSSF, NWDAF, UDM, NSACF, AMF, SMF, PCF, AF, UE, RAN, AN, UPF, DN, UDR, NEF, or BSF as shown in FIGS. 1, 2 or 3.

Referring to FIG. 4, the network entity 400 may be configured with a transceiver 410, a processor 420, and memory 430. The transceiver 410, processor 420 and memory 430 of the network entity 400 may operate according to the aforementioned communication method of the network entity 400. Components of the network entity 400 are not, however, limited thereto. For example, the network entity 400 may include more components than described above. In addition, the transceiver 410, the processor 420, and the memory 430 may be implemented in a single chip. The processor 420 may include one or more processors.

A receiver of the network entity 400 and a transmitter of the network entity 400 are collectively referred to as the transceiver 410, which may transmit or receive signals to or from the UE or a base station. The signals to be transmitted to or received from the UE or the base station may include control information and data.

The transceiver 410 may perform functions for transmitting and receiving signals on a wireless channel. For example, the transceiver 410 may receive a signal on a wireless channel and output the signal to the processor 420, and transmit a signal output from the processor 420 on a wireless channel.

The memory 430 may store a program and data required for operation of the network entity 400. Furthermore, the memory 430 may store control information or data included in a signal obtained by the network entity 400. The memory 430 may include a storage medium such as a ROM, a RAM, a hard disk, a CD-ROM, and a DVD, or a combination of storage mediums. Alternatively, the memory 430 may not be separately present but integrated into the processor 420. The memory 430 may include a volatile memory, a non-volatile memory, or a combination of the volatile memory and the non-volatile memory. The memory 430 may also provide the stored data at the request of the processor 420.

The processor 420 may control a series of processes for the network entity 400 to operate in accordance with the embodiments of the present disclosure. For example, the processor 420 may receive control signals and data signals through the transceiver 410 and process the received control signals and data signals. The processor 420 may transmit the processed control signal and data signal through the transceiver 410. The processor 420 may record data to the memory 430 or read out data from the memory 1330. The processor 420 may perform functions of a protocol stack requested by a communication standard. For this, the processor 420 may include at least one processor or microprocessor. In an embodiment, part of the transceiver 410 or the processor 420 may be referred to as a communication processor (CP).

Several embodiments have been described, but a person of ordinary skill in the art will understand and appreciate that various modifications can be made without departing from the scope of the present disclosure. Thus, it will be apparent to those of ordinary skill in the art that the present disclosure is not limited to the embodiments described, but can encompass not only the appended claims but the equivalents. For example, an element described in the singular form may be implemented as being distributed, and elements described in a distributed form may be implemented as being combined.

The scope of the present disclosure is defined by the appended claims, and it will be understood by those of ordinary skill in the art that various changes in form and details may be made without departing from the spirit and scope of the present disclosure as defined by the appended claims and their equivalents.

## Claims

1. A method of operating an access and mobility management function (AMF) in a wireless communication system, the method comprising:
transmitting, to a unified data management (UDM), a subscription information request message corresponding to a user equipment (UE);
receiving, from the UDM, a notification message about updated subscription information; determining whether to update UE configuration information related to a network slice for the UE;
when the UE configuration information related to the network slice is updated, transmitting the updated UE configuration information to the UE; and
receiving, from the UE, a message indicating that updating of configuration information is completed.

2. The method of claim 1, wherein the subscription information request message comprises an identifier of the UE.

3. The method of claim 1, wherein the notification message about the updated subscription information is received based on time information stored in a UDR.

4. A method of operating a unified data management (UDM) in a wireless communication system, the method comprising:
receiving, from an access and mobility management function (AMF), a subscription information request message corresponding to a user equipment (UE);
receiving, from an application function (AF), a message including information for network slice selection or re-selection;
identifying a subscription permanent identifier (SUPI) associated with the UE;
transmitting, to a unified data repository (UDR), a request message for obtaining subscriber information for the SUPI, and obtaining the subscriber information from the UDR;
transmitting, to the UDR, a message for subscriber information update;
transmitting, to the AMF, a notification message regarding updated subscription information;
receiving, from the AMF, subscription information request message for the UE; and
transmitting, to the AMF, updated subscription information in response to the subscription information request message.

5. The method of claim 4, wherein the subscription information request message comprises an identifier of the UE.

6. The method of claim 4, wherein the message including the information for network slice selection or re-selection comprises at least one of UE identifier information, a transaction reference identifier, network slice selection information or information indicating a priority for application of slice selection information.

7. The method of claim 4, wherein the message for the subscriber information update comprises at least one of an SUPI, S-NSSAI information or subscribed S-NSSAI information.

8. The method of claim 4, wherein the notification message regarding the updated subscription information is transmitted based on time information stored in the UDR.

9. The method of claim 4, wherein the notification message regarding the updated subscription information comprises at least one of an SUPI, an internal group identifier, S-NSSAI information, or subscribed S-NSSAI information.

10. A method for operating a policy control function (PCF) in a wireless communication system, the method comprising:
receiving, from an access and mobility management function (AMF), a subscription information request message corresponding to a user equipment (UE);
receiving a message including information for network slice selection or re-selection from an application function (AF);
transmitting, to a unified data repository (UDR), a request message for obtaining subscriber information for a subscription permanent identifier (SUPI) associated with the UE, and obtaining, from the UDR, the subscriber information;
transmitting a message for subscriber information update to the UDR;
transmitting a notification message regarding updated subscription information to the AMF;
receiving, from the AMF, a policy information request message for the UE;
identifying subscription information stored in the UDR based on the policy information request message; and
transmitting, to the AMF, updated subscription information in response to the policy information request message.

11. The method of claim 10, wherein the subscription information request message comprises an identifier of the UE.

12. The method of claim 10, wherein the message including the information for network slice selection or re-selection comprises at least one of UE identifier information, a transaction reference identifier, network slice selection information or information indicating a priority for application of slice selection information.

13. The method of claim 10, wherein the message for the subscriber information update comprises at least one of an SUPI, S-NSSAI information or subscribed S-NSSAI information.

14. The method of claim 10, wherein the notification message regarding the updated subscription information is transmitted based on time information stored in the UDR.

15. The method of claim 10, wherein the notification message regarding the updated subscription information comprises at least one of an SUPI, an internal group identifier, S-NSSAI information, or subscribed S-NSSAI information.
